# EUROPEAN PATENT APPLICATION

(11) **EP 1 569 389 A1**
(43) Date of publication of application: **31.08.2005**
(21) Application number: 02783756.6
(22) Date of filing: 03.12.2002
(51) Int. Cl.: H04L 12/56, H04L 12/46

(54) **COMMUNICATION DEVICE AND BAND CONTROL METHOD**

(71) Applicant: FUJITSU LIMITED, Kanagawa 211-8588 (JP)
(72) Inventor: NISHIMURA, Kazuto, c/o FUJITSU LIMITED, Kawasaki-shi, Kanagawa 211-8588 (JP); SUMINO, Satoshi, c/o FUJITSU LIMITED, Kawasaki-shi, Kanagawa 211-8588 (JP); KAWARAI, Kenichi, c/o FUJITSU LIMITED, Kawasaki-shi, Kanagawa 211-8588 (JP)
(74) Representative: Sunderland, James Harry
(86) International application number: PCT/JP2002/012677
(87) International publication number: WO 2004/051942

(57) **Abstract**

A communication apparatus is provided for constructing a virtual group with a portion of information appliances provided over a network. The communication apparatus includes a tag attaching unit for attaching to a frame received at an input port a group identification tag for identifying the group to which the frame belongs and a route identification tag for identifying the route of the frame, a queue for storing the frame according to the group identification tag and the route identification tag attached to the frame, and a read control unit for controlling the read rate for reading the frame from the queue.

## Description

### TECHNICAL FIELD

The present invention relates generally to a communication apparatus and a band control method, and particularly to a communication apparatus for constructing a virtual group formed by a portion of information appliances implemented over a network.

### BACKGROUND ART

In a network constructed by the Ethernet (registered trademark) such as a LAN, virtual LAN (VLAN) technology may be used to construct a virtual group with a portion of information appliances (stations) provided in a LAN.

In the VLAN technology, a physical network structure and a logical network structure are separated so that stations residing over physically separate segments may be grouped into one virtual segment. Such VLAN technology is defined by the IEEE 802.1Q standard, and presently, two types of VLAN technology exist, namely, the port VLAN and the tag VLAN.

Port VLAN involves assigning LAN numbers to the ports of bridge apparatuses such as switching hubs, and arranging traffic flow such that each port only receives traffic designated for its corresponding group with its corresponding VLAN number. Port VLAN enables separation of traffic into physical ports, and may therefore be suitable for fields such as security and network management.

Tag VLAN involves attaching two bytes of information called a 'VLAN tag' to a frame, and setting a VLAN number (VLAN ID) for identifying the group to which the frame belongs. Tag VLAN enables plural groups to share one physical link. The VLAN tag is used as an identifier for identifying a corresponding group of a frame.

In recent years and continuing, application of the Ethernet to a metropolitan area network (MAN) is being contemplated. Such a MAN may be constructed by an electronic communications company (carrier) to provide network service to a user.

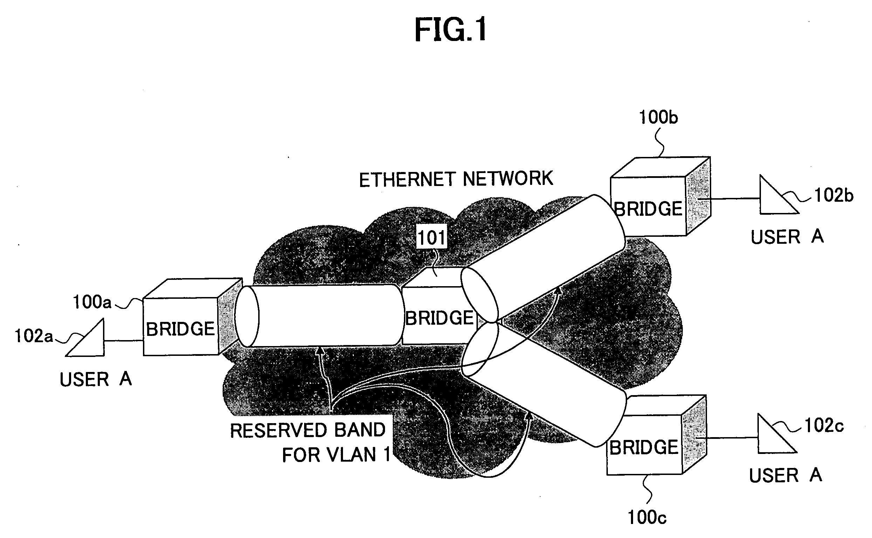

FIG.1 illustrates an exemplary configuration of an Ethernet service scheme in a MAN. In the MAN shown in FIG.1, a virtual group (user A) is made up of stations 102a~102c, which constitute a portion of a LAN constructed by the Ethernet (to be simply referred to as Ethernet network hereinafter).

In the present example, a VLAN tag is assigned to user A so that bridge apparatuses 100a~100c and 101 within the Ethernet network may use the VLAN tag to realize frame transmission between the stations 102a~102c. The VLAN tag is used as an identifier to identify a corresponding group of a user (i.e. subscriber), and in this way, band and other QoS (quality of service) may be provided to a given group according to its VLAN tag.

Also, technology exists for connecting plural Ethernet networks by an MPLS (Multiprotocol Label Switching) network, such technology being referred to as EoMPLS (Ethernet over MPLS). EoMPLS involves attaching an identifier called a 'label' to a frame within an MPLS network, and conducting frame transmission based on this label.

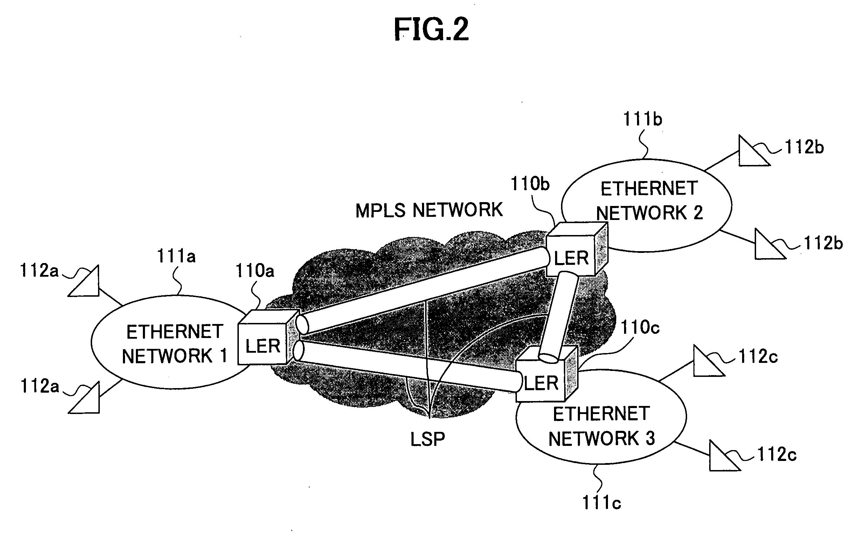

FIG.2 shows an exemplary configuration of an EoMPLS network. In the example of FIG.2, a virtual group is made up of stations 112a~112c corresponding to portions of Ethernet networks 111a~111c, respectively. The Ethernet networks 111a~111c are interconnected by an LSP (Label Switch Path) within the MPLS network. The Ethernet networks 111a~111c are connected to the MPLS via LER (Label Edge Router) 110a~110c, respectively.

In the present example, an LSP may be established between the Ethernet networks 111a~111c by using EoMPLS technology, and thereby, a desired band may be secured as a reserved band in each LSP to realize band control betweeen the Ethernet networks 111a~111c.

However, in the case of an Ethernet service scheme in a MAN as is illustrated in FIG.1, the VLAN tag is used as an identifier for identifying a corresponding group of a user, and consequently, problems such as those described below are created.

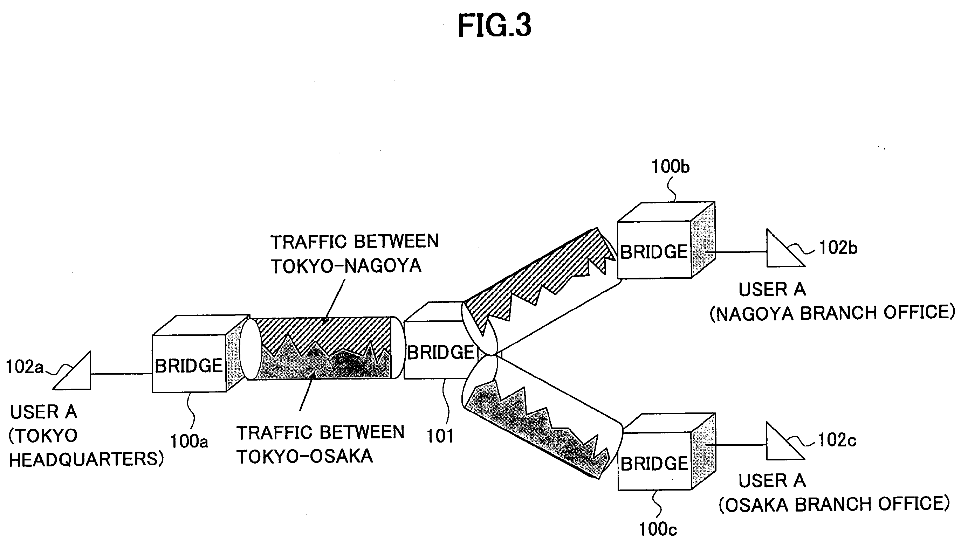

Referring to FIG.3, if user A subscribes to an Ethernet service at three different locations, namely, Tokyo headquarters, Nagoya branch office, and Osaka branch office, for example, the reserved band is equally distributed between these locations. In a WAN as illustrated in FIG.3, the group corresponding to user A may be identified by the VLAN tag; however, the respective locations of the group may not be identified and thereby band usage may not be controlled with respect to the different locations.

For example, if the reserved band corresponds to 100 Mb/s, it is not possible to control usage of the band so that 80 Mb/s may be used between the Tokyo headquarters and the Osaka branch office and 20 Mb/s between the Tokyo headquarters and the Nagoya branch office. In other words, in the present example, the bridge apparatuses 100a~100c and 101 are merely capable of handling traffic as that designated for user A and are unable to recognize the different locations belonging to the group of user A.

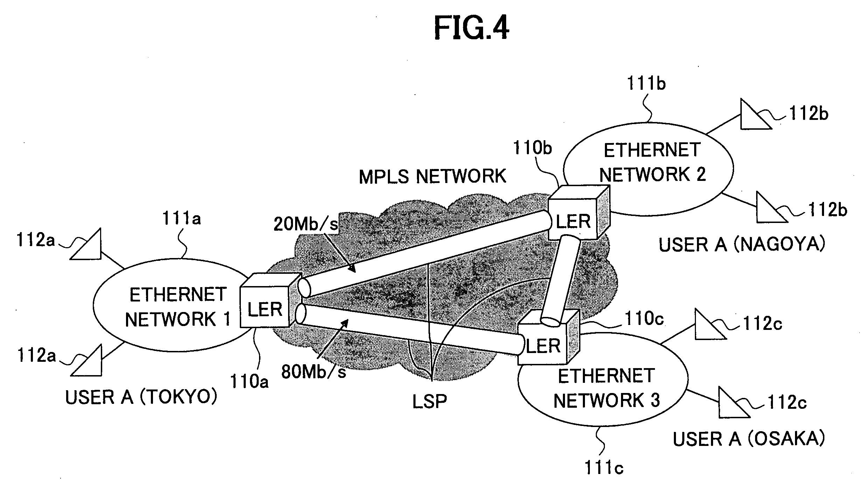

Referring to FIG.4, in the case of using EoMPLS technology as is illustrated in FIG.2, an LSP may be established between the Ethernet networks, and a desired band may be set as the reserved band for each LSP so that band usage between the respective locations (base) may be suitably controlled.

For example, if the reserved band is 100 Mb/s, band usage may be controlled so that 80 Mb/s is used between the Tokyo head quarters and the Osaka branch office, and 20 Mb/s is used between the Tokyo head quarters and the Nagoya branch office.

However, the MPLS network requires complicated network designing. Also, in the EoMPLS technology, the frame being transmitted over the Ethernet network is encapsulated by the frame being transmitted over the MPLS network, thereby resulting in a large overhead.

### DISCLOSURE OF THE INVENTION

The present invention has been conceived in response to the one or more problems of the related art and its object is to provide a communication apparatus and a band control method for enabling band control of bases within a virtual group that is constructed by a portion of information appliances provided over a network.

To achieve the above-described object, the present invention, according to one aspect, provides a communication apparatus that constructs a virtual group with a portion of information appliances provided over a network, the apparatus including:
a tag attaching unit configured to attach to a frame received at an input port a group identification tag for identifying the group to which the frame belongs and a route identification tag for identifying a route of the frame;
a queue configured to store the frame according to the group identification tag and the route identification tag attached to the frame;
a read control unit configured to control a read rate for reading the frame from the queue.

In a communication apparatus according to an aspect of the present invention, a group identification tag and a route identification tag are attached to a frame and band control may be realized according to the route identification tag. Thereby, band control may be easily conducted for the respective bases of a virtual group formed by a portion of information appliances provided over a network.

According to a preferred embodiment of the present invention, the communication apparatus of the present invention further includes:
a traffic flow control unit configured to control traffic flow of the frame to be stored in the queue according to the group identification tag attached to the frame;
wherein the frame is stored in the queue according to the route identification tag attached to the frame.

In a communication apparatus according to the present embodiment, traffic flow of a frame to be stored in a queue may be controlled for each group identification tag and frames with the same route may be stored in the same queue so that the number of queues may be reduced.

According to another preferred embodiment of the present invention, the traffic flow control unit is configured to control a maximum flow of the frame to be stored in the queue according to the group identification tag attached to the frame.

In a communication apparatus according the present embodiment, the maximum flow of a frame to be stored in a queue may be controlled for each group identification tag so that band resources may be fairly distributed among differing groups of frames within a given queue.

According to another preferred embodiment of the present invention, the traffic control unit is configured to control a maximum flow and a minimum flow of the frame to be stored in the queue according to the group identification tag attached to the frame.

In a communication apparatus according to the present embodiment, the minimum flow and the maximum flow of a frame to be stored in a queue may be controlled for each group identification tag. Thereby, a minimum band may be secured for each corresponding group of a frame that is stored in a given queue, while an unused band that is secured for a group may be allotted to another group.

According to another preferred embodiment of the present invention, when the traffic flow of the frame is greater than or equal to the minimum flow and is less than or equal to the maximum flow, the traffic flow control unit attaches to the frame an indicator for indicating that the frame is to be discarded with priority upon congestion of the queue.

In a communication apparatus according to the present embodiment, a frame with a traffic flow that is greater than or equal to a minimum flow and is less than or equal to a maximum flow may be discarded with priority upon congestion of a queue, and thereby, a frame of a group that is assigned a band having a traffic flow below the minimum flow rate may be read with priority.

According to another preferred embodiment of the present invention, the route identification tag is attached to a position corresponding to a position in the frame to which the group identification tag is attached prior to the attachment of the route identification tag.

In a communication apparatus according to the present embodiment, a route identification tag is attached to a frame at a position corresponding to where a group identification tag is previously positioned, and thereby, a function of the communication apparatus of transferring a frame according to its group identification tag may be used to transmit a frame to another communication apparatus according to the route identification tag attached to the frame.

Also, the present invention, according to another aspect, provides a communication apparatus that constructs a virtual group with a portion of information appliances provided over a network, the apparatus comprising:
a tag removing unit configured to remove from a frame received at an input port a route identification tag for identifying a route of the frame; and
an output unit configured to read from the frame a group identification tag for identifying the group to which the frame belongs and output the frame to an output port according to the group identification tag.

In a communication apparatus according to an aspect of the present invention, a route identification tag is removed from a frame having a group identification tag and a route identification tag attached thereto, and thereby, a frame that is converted back to its original state may be output to an output port.

Also, the present invention, according to another aspect, provides a band control method for controlling a communication apparatus that constructs a virtual group with a portion of information appliances provided over a network, the method comprising:
a tag attaching step of attaching to a frame received at an input port a group identification tag for identifying the group to which the frame belongs and a route identification tag for identifying a route of the frame;
a buffering step of storing the frame in a queue according to the group identification tag and the route identification tag attached to the frame; and
a reading step of reading the frame from the queue according to a read rate set for the queue.

In a band control method according to an aspect of the present invention, a group identification tag and a route identification tag are attached to a received frame to realize band control based on the route identification tag of a frame. Thereby, band control may be easily realized for the respective bases of a virtual group formed by a portion of information appliances provided over a network.

Also, the present invention, according to another aspect, provides a band control method for controlling a communication apparatus that constructs a virtual group with a portion of information appliances provided over a network, the method comprising:
a tag removing step of removing from a frame received at an input port a route identification tag for identifying a route of the frame; and
an outputting step of reading from the frame a group identification tag for identifying the group to which the frame belongs and outputting the frame to an output port according to the read group identification tag.

In a band control method according to an aspect of the present invention, a route identification tag is removed from a frame having a group identification tag and a route identification tag attached thereto, and thereby, a frame that is converted back to its original state may be output to an output port.

### BRIEF DESCRIPTION OF THE DRAWINGS

Other objects, features and advantages of the present invention will become more apparent from the following detailed description when read in conjunction with the accompanying drawings.
FIG.1 is a diagram showing an exemplary scheme of an Ethernet service in a MAN;
FIG.2 is a diagram showing an exemplary configuration of an EoMPLS network;
FIG.3 is a diagram illustrating a band control scheme of an Ethernet service in a MAN;
FIG.4 is a diagram showing a band control scheme for controlling the bands between bases provided over an EoMPLS network;
FIG.5 is a diagram showing a configuration of an Ethernet network implementing bridge apparatuses as communication apparatuses according to an embodiment of the present invention;
FIG.6 is a diagram showing an exemplary configuration of a bridge apparatus according to an embodiment of the present invention;
FIG.7 is a diagram showing a configuration of a queue control unit according to a first embodiment of the present invention;
FIG.8 is a diagram showing a configuration of a queue control unit according to a second embodiment of the present invention;
FIG.9 is a diagram showing a configuration of a queue control unit according to a third embodiment of the present invention;
FIG.10 is a diagram showing a configuration of a queue control unit according to a fourth embodiment of the present invention;
FIG.11 is a diagram illustrating an exemplary operation of the bridge apparatus upon receiving a non-learned frame; and
FIG.12 is a diagram showing an exemplary configuration of another bridge apparatus according to an embodiment of the present invention.

### BEST MODE FOR CARRYING OUT THE INVENTION

In the following, preferred embodiments of the present invention are described with reference to the accompanying drawings.

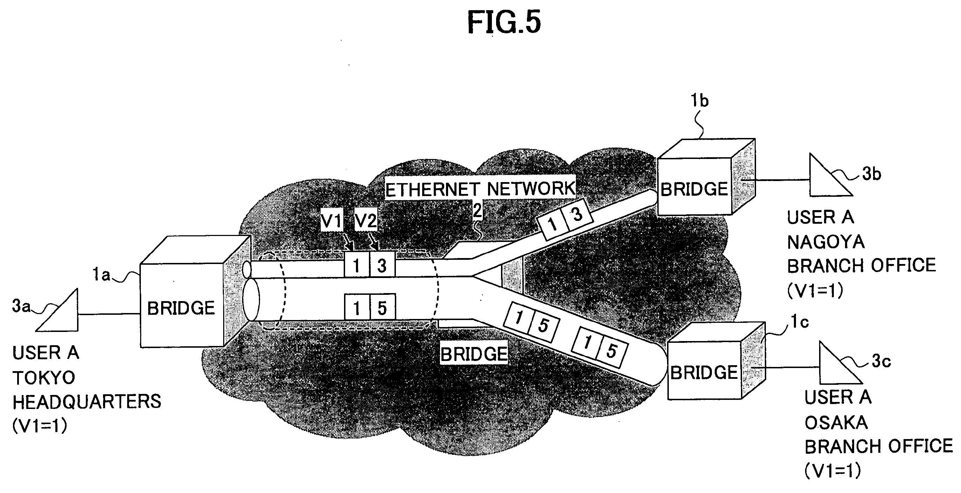

FIG.5 shows an exemplary configuration of a network using communication apparatuses according to an embodiment of the present invention; more specifically, FIG.5 shows an exemplary Ethernet network using bridge apparatuses. In the following description, an example is described in which a user A having base points at Tokyo headquarters, Nagoya branch office, and Osaka branch office establishes connection by assigning 20 Mb/s between the Tokyo headquarters and the Nagoya branch office and 80 Mb/s between the Tokyo headquarters and the Osaka branch office.

In a case where user A subscribes to Ethernet service at three locations; namely, the Tokyo headquarters, the Nagoya branch office, and the Osaka branch office, station 3a at the Tokyo headquarters, station 3b at the Nagoya branch office, and station 3c at the Osaka branch office form a virtual group.

As is shown in the drawing, station 3a is connected to a bridge apparatus 1a; station 3b is connected to a bridge apparatus 1b, and station 3c is connected to a bridge apparatus 1c. The bridge apparatuses 1a~1c are interconnected via a bridge apparatus 2.

According to the present embodiment, a first VLAN tag V1 for identifying a user group and a second VLAN tag V2 for identifying a frame route are assigned to a frame being transmitted between two of the bridge apparatuses 1a~1c. In FIG.5, VLAN tag V1=1 is set for the group corresponding to user A, VLAN tag V2=3 is set for the route between the Tokyo headquarters and the Nagoya branch office, and VLAN tag V2=5 is set for the route between the Tokyo head quarters and the Osaka branch office. It is noted that in FIG.5, frames being transmitted between two of the bridge apparatuses 1a~1c are only represented by their VLAN tags V1 and V2, and other components of these frames are omitted from the drawing for the sake of simplicity.

For example, in the case of a port VLAN, a frame transmitted from station 3a of the Tokyo headquarters may be supplied to the bridge apparatus 1a. In turn, the bridge apparatus 1a may attach to this frame a VLAN number 1 that is assigned to the port receiving the frame as a VLAN tag V1.

In the case of a tag VLAN, a frame transmitted from the station 3a at the Tokyo headquarters is supplied to the bridge apparatus 1a after a VLAN tag V1 is attached to the frame at a prior stage apparatus.

Then, the bridge apparatus 1a attaches a VLAN tag V2 to the frame according to the route of the received frame having a VLAN tag V1 attached thereto. For example, a frame that is to be transmitted from station 3a to station 3b may have a VLAN tag V1=1 and a VLAN tag V2=3 attached thereto, and a frame that is to be transmitted from station 3a to station 3c may have a VLAN tag V1=1 and a VLAN tag V2=5 attached thereto.

Then, the bridge apparatus 1a stores (buffers) the frame with the VLAN tags V1 and V2 attached thereto in a queue according to the VLAN tags V1 and V2. In the example shown in FIG.5, the VLAN tag V1 and V2 are attached to a frame within the bridge apparatus 1a; however, other embodiments are possible in which plural bridge apparatuses are used to attach the VLAN tags V1 and V2 to a frame, for example.

It is noted that band control for the queues storing frames according to their VALN tags may be realized by WRR (Weighted Round Robin). For example, a frame stored in a queue for a VLAN tag V1=1 and a VLAN tag V2=3 may be read at 20 Mb/s, whereas a frame stored in a queue for a VLAN tag V1=1 and a VLAN tag V2=5 may be read at 80 Mb/s. A frame that is read from a queue according to the band set in a manner described above may then be transmitted to the bridge apparatus 2.

In the present example, a frame transmitted from the bridge apparatus 1a is received at a tag VLAN port of the bridge apparatus 2. The bridge apparatus 2 is arranged to identify the route of a received frame by referring to its outermost VLAN tag, namely, its VLAN tag V2. It is noted that the bridge apparatus is arranged to identify a domain of a frame by simply referring to the outermost VLAN tag of a frame, and the present embodiment uses such feature of the bridge apparatus to identify the route of a frame. More specifically, by stacking a VLAN tag V2 on a VLAN tag V1 so that the VLAN tag V2 is positioned at an outermost edge of a frame, the bridge apparatus 2 may identify the route of a frame by simply referring to the outer most VLAN tag V2 of a received frame without recognizing the existence of two stacks of tag information.

The bridge apparatus 1b or 1c is arranged to receive a frame from the bridge apparatus 2 and remove the second VLAN tag V2 from the received frame. In the case of the port LAN, the bridge apparatus 1b or 1c removes the VLAN tag V2 and then the VLAN tag V1 from the frame, and transmits the resulting frame to the corresponding station 3b or 3c. In the case of the tag VLAN, the bridge apparatus 1b or 1c removes the VLAN tag V2 after which it transmits the frame to a subsequent apparatus where the VLAN tag V1 may be removed. Then, the resulting frame is transmitted to the corresponding station 3b or 3c.

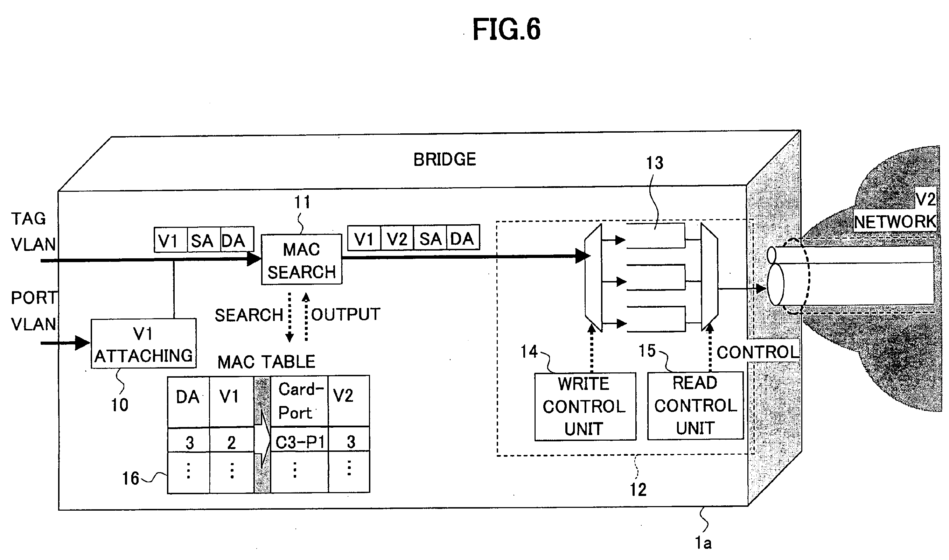

FIG.6 shows an exemplary configuration of the bridge apparatus 1a. According to the present example, the bridge apparatus 1a includes a VLAN tag V1 attaching unit 10, a MAC search unit 11, a queue control unit 12, at least one queue 13, a write control unit 14, a read control unit 15, and a MAC table 16. It is noted that in the example of FIG.6, only a VLAN tag V1, a VLAN tag V2, a DA (destination address), and a SA (source address) of a frame passing through the bridge apparatus 1a are indicated, and other components of the frame are omitted from the drawing for the sake of simplicity.

In the example of FIG.5 in which the station 3a is directly connected to the bridge apparatus 1a and the VLAN corresponds to a port VLAN, the VLAN tag V1 attaching unit 10 attaches a VLAN tag V1 to a frame received from the station 3a and transmits the frame with the VLAN tag V1 to the MAC search unit 11.

On the other hand, when the station 3a is not directly connected to the bridge apparatus 1a in which case the VLAN corresponds to a tag VLAN, a frame having a VLAN tag V1 attached thereto in a prior stage apparatus is transmitted to the MAC search unit 11.

According to the present example, the MAC search unit 11 is arranged to read the DA and the VLAN tag V1 of a received frame, and access a MAC table 16 to search for a corresponding VLAN tag V2 and a port to which the frame is to be output using the DA and the VLAN tag V1 as key information. The MAC table 16 indicates the correspondence between a DA, a VLAN tag V1, a port, and a VLAN tag V2. After determining the corresponding VLAN tag V2 and output port, the MAC search unit 11 attaches the corresponding VLAN tag V2 to the received frame and transmits this frame to the queue control unit 12.

In turn, the write control unit 14 included in the queue control unit 12 reads the VLAN tags V1 and V2 from the received frame, and searches for a queue 13 to which the frame is to be stored based on the VLAN tags V1 and V2 as is described in detail below. Then, the queue control unit 12 stores the frame in the corresponding queue 13.

The read control unit 15 included in the queue control unit 12 searches for a corresponding read rate for reading the frame. It is noted that a predetermined read rate may be set for each queue, so that a frame may be read from its corresponding queue 13 at a corresponding read rate. In this way, the queue control unit 12 is able to control a frame read rate for each queue.

In the following, the operation of the queue control unit 12 is described in greater detail.

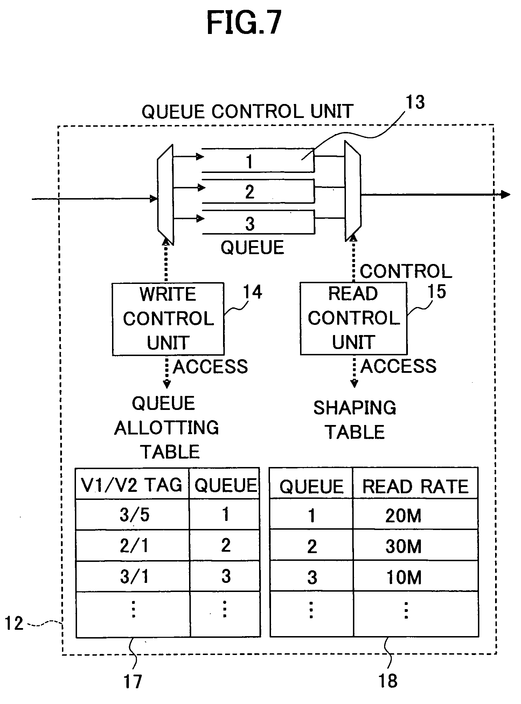

FIG.7 is a diagram showing a configuration of a queue control unit 12 according to a first embodiment of the present invention. In the example of FIG.7, the queue control unit 12 includes at least one queue 13, a write control unit 14, a read control unit 15, a queue allotting table 17, and a shaping table 18.

In the present example, the write control unit 14 of the queue control unit 12 is arranged to read the VLAN tags V1 and V2 of a received frame, and access the queue allotting table 17 to search for a corresponding queue 13 using the VLAN tags V1 and V2 as key information. The queue allotting table 17 indicates a correspondence between VLAN tags V1 and V2 and a queue. After determining the corresponding queue 13 based on the VLAN tags V1 and V2, the write control unit 14 stores the received frame in the corresponding queue 13.

In the example of FIG.7, different queues 13 are provided for different combinations of the VLAN tags V1 and V2. Thus, the queue control unit 12 allots a received frame according to its VLAN tags V1 and V2.

Also, in the present example, the read control unit 15 of the queue control unit 12 is arranged to search for a corresponding read rate for a queue 13 from the shaping table 18 and read a frame from the queue 13 at the corresponding read rate. In this way, the queue control unit 12 may be able to control a frame read rate for each queue 13.

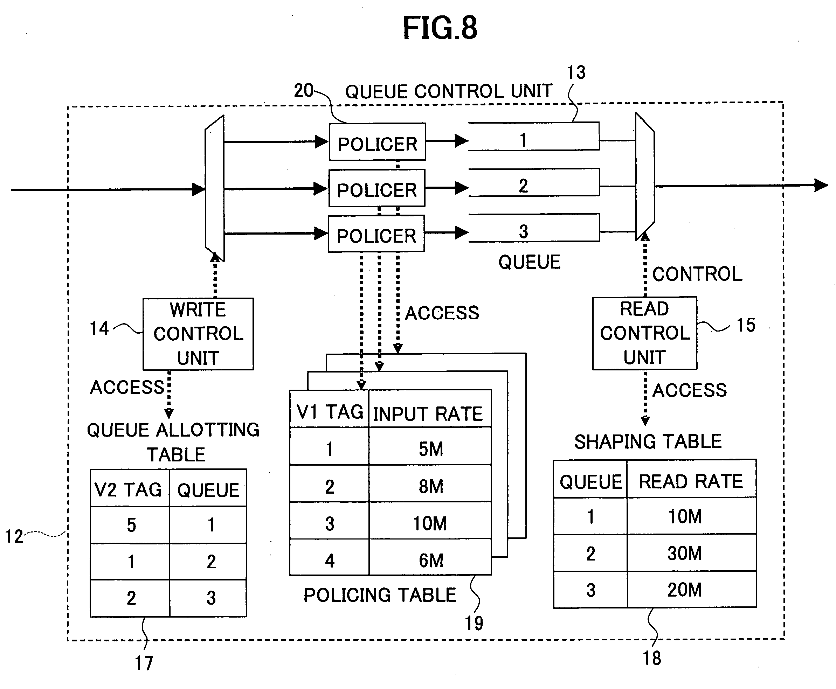

FIG.8 is a diagram showing a configuration of a queue control unit 12 according to a second embodiment of the present invention. The queue control unit 12 of FIG.8 includes at least one queue 13, a write control unit 14, a read control unit 15, a queue allotting table 17, a shaping table 18, a policing table 19, and at least one policer 20.

According to the present example, the write control unit 14 of the queue control unit 12 is arranged to read the VLAN tag V2 of a received frame and access the queue allotting table 17 to search for a corresponding queue for the frame using the VLAN tag V2 as key information. The queue allotting table 17 indicates a correspondence between a VLAN tag V2 and a queue 13. The queue control unit 12 allots a received frame to a corresponding queue 13 according to its VLAN tag V2; namely, its route.

In an arrangement according to the present example, policing of traffic flow is conducted with respect to each VLAN tag V1; namely, for each group, so that a particular group may be prevented from dominating the read band. The queue control unit 12 of FIG.8 includes a policer 20 before each queue 13 to conduct policing of a frame being stored in each queue 13 to thereby control the traffic flow of a frame according to its VLAN tag V1.

The policer 20 is arranged to read the VLAN tag V1 of a received frame and access the policing table 19, which indicates a correspondence between a VLAN tag V1 and an input rate, to determine a corresponding input rate for the received frame using the read VLAN tag V1 as key information. It is noted that the policing table 19 may be individually set for each policer 20. In this way, the queue control unit 12 may allot a received frame according to its VLAN tag V2 and control the traffic flow of the allotted frame according to its VLAN tag V1.

After the policing conducted by the policer 20, a frame that is allotted according to its VLAN tag V2 may be stored in its corresponding queue 13. It is noted that in the example of FIG.8, different queues 13 are provided with respect to different VLAN tags V2, and thereby, the number of queues to be provided in the queue control unit 12 may be reduced compared to the example of FIG.7.

Also, in the present example, the read control unit 15 of the queue control unit 12 is arranged to access the shaping table 18 to search for a corresponding read rate for a frame from the respective read rates set to the queues 13 in the shaping table 18, and read the frame from its corresponding queue 13 at the corresponding read rate. In this way, the queue control unit 12 is able to control a frame read rate for each queue 13.

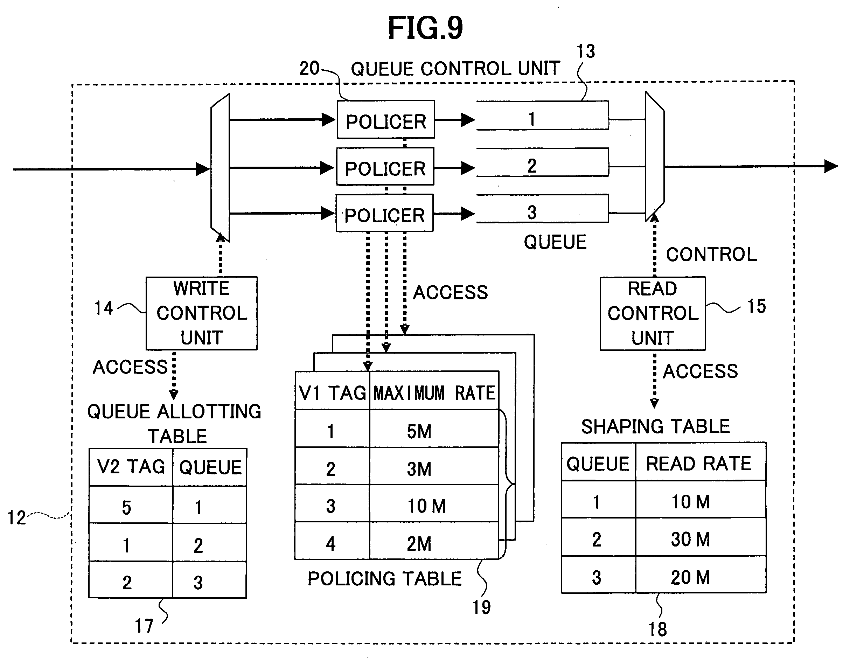

FIG.9 is a diagram showing a configuration of a queue control unit 12 according to a third embodiment of the present invention. In the queue control unit 12 of FIG.9 the shaping table 18 and the policing table 19 are set differently from the example of FIG.8.

Specifically, in FIG.9, the policing table 19 indicates a maximum rate for each VLAN tag or each group. Accordingly, the policer 20 conducts policing of a frame to be stored in a queue 13 according to a maximum rate set for the corresponding group of the frame referring to the policing table 19. In the shaping table 18 of the present example, the sum of the maximum rates for the corresponding groups of frames stored in a queue 13 is set as the read rate of the queue 13.

By setting the sum of the maximum rates of the corresponding groups of the frames stored in a queue 13 as the read rate of the queue 13 in the shaping table 18, traffic passing through a corresponding policer 20 may be transmitted without being discarded.

For example, in a case where frames belonging to groups of users A and B are stored in the same queue 13, if the maximum rate set for the group of user A is 50 Mb/s, and the maximum rate set for the group of user B is 80 Mb/s, the read rate of the corresponding queue 13 is set to 130 Mb/s in the shaping table 18.

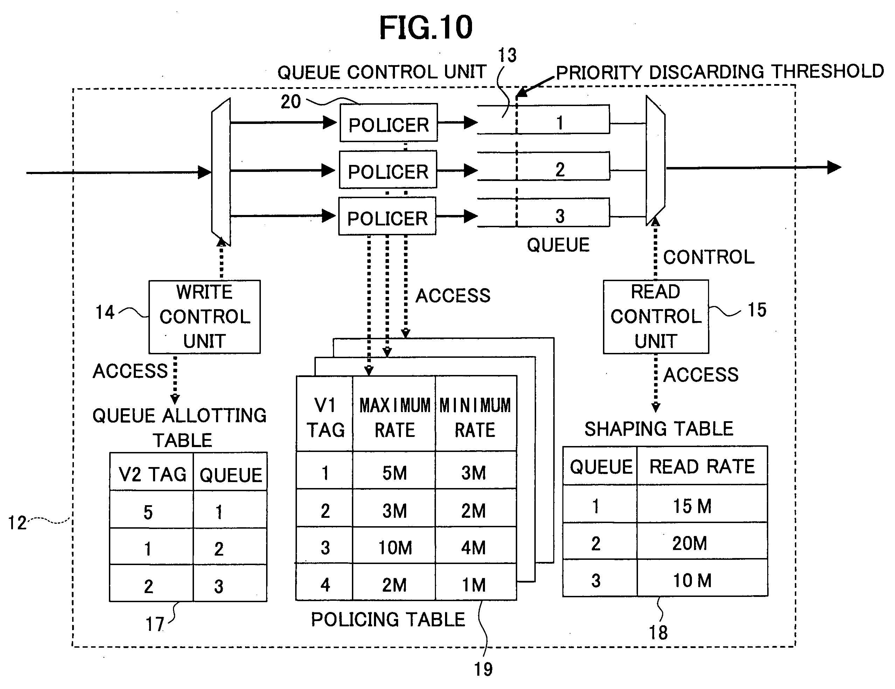

FIG.10 is a diagram showing a configuration of a queue control unit 12 according to a fourth embodiment of the present invention. In the queue control unit 12 of FIG.10, the shaping table 18 and the policing table 19 are set differently with respect to the examples of FIGS.8 and 9.

According to the present example, the policing table 19 sets a minimum rate and a maximum rate for each VLAN tag V1; namely, for each group. The policer 20 is arranged to conduct policing of a frame to be stored in a queue 13 according to the minimum rate and the maximum rate for the corresponding group of the frame set in the policing table 19. In this example, traffic with flow rate that is within the range between the minimum rate and the maximum rate (best effort traffic) has a priority discarding bit set thereto so as to be discarded with priority in its corresponding queue 13.

Also, in each queue 13, a priority discarding threshold value is set, and when traffic in a queue 13 exceeds the priority discarding threshold value, a frame with the priority discarding bit may be discarded with priority. By giving priority for discarding a frame having a priority discarding bit over other frames, traffic below the minimum rate may be read with priority when traffic in a queue 13 exceeds the priority discarding threshold value.

For example, in the case where frames belonging to groups of users A and B are stored in the same queue 13, if the maximum rate and minimum rate for the group of user A are set to 50 Mb/s and 20 Mb/s, respectively, and the maximum rate and the minimum rate set for the group of user B are 80 Mb/s and 20 Mb/s, respectively, the read rate for the queue 13 is set to 30~130 Mb/s in the shaping table 18. It is noted that a high read rate set in the shaping table 18 enables efficient passage of the best effort traffic while a low read rate tends to degrade the passage of the best effort traffic.

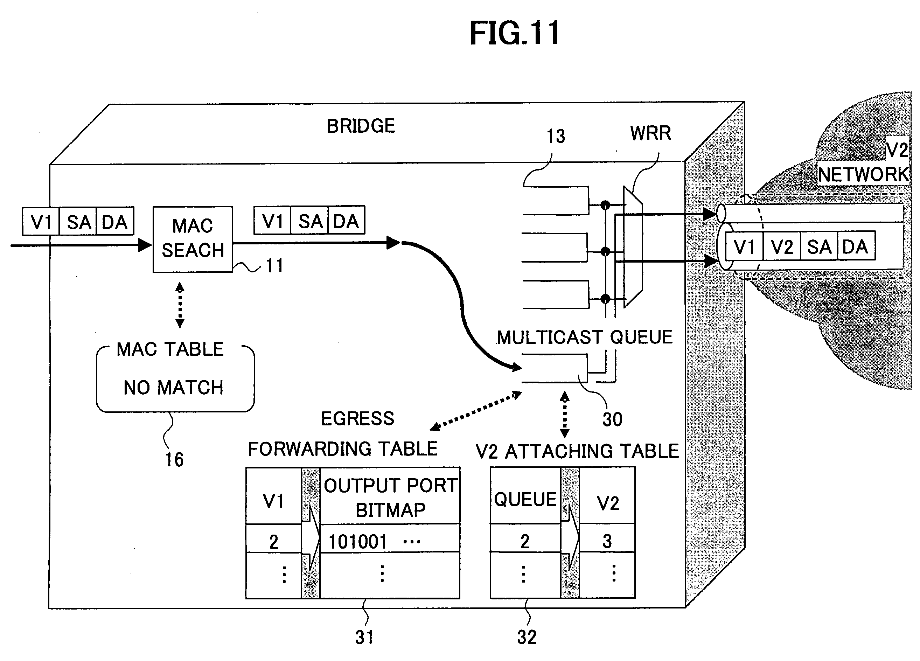

In the following, an operation of the bridge apparatus 1a in response to receiving a non-learned frame is described with reference to FIG.11.

FIG.11 is a diagram illustrating an exemplary operation of the bridge apparatus 1a in response to receiving a non-learned frame. It is noted that basic operation steps conducted in the present example are identical to those described in relation to the example of FIG.6, and their descriptions are omitted accordingly.

In the present example, the MAC search unit 11 reads the DA and the VLAN tag V1 of a received frame and accesses the MAC table 16 to search for a corresponding VLAN tag V2 and a port to which the frame is to be output using the read DA and the VLAN tag V1 as key information. In the present example, the received frame corresponds to a non-learned frame, and thereby, the MAC search unit 11 is unable to find the corresponding VLAN tag V2 and the port to which the frame is to be output from the MAC table 16.

In such a case, the MAC search unit accesses a forwarding table 31 using the VLAN tag V1 of the received frame as key information to acquire a bit map of the physical and logical ports belonging to the VLAN tag V1 so that it may multicast the frame to the VLAN tag V1 domain. In such an operation, the frame may be accumulated in a multicast queue 30 to wait for a readout opportunity to each port.

When a readout opportunity is granted, a corresponding VLAN tag V2 for the queue from which a frame is to be read is read out from the VLAN tag attaching table 32. In this way, a read control unit may be able to transmit a frame with a VLAN tag V2 attached thereto even when the frame is received as a non-learned frame.

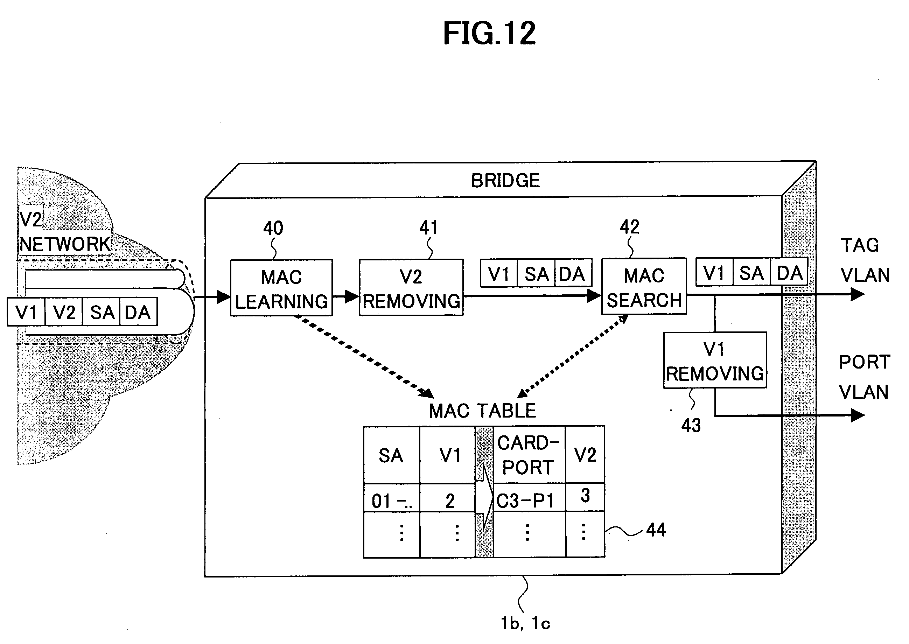

FIG.12 is a diagram showing an exemplary configuration of the bridge apparatuses 1b and 1c. According to the present example, the bridge apparatuses 1b and 1c each include a MAC learning unit 40, a VLAN tag V2 removing unit 41, a MAC search unit 42, a VLAN tag V1 removing unit 43, and a MAC table 44. It is noted that in FIG.12, only the VLAN tag V1, the VLAN tag V2, the DA, and the SA are indicated in the frame passing through the bridge apparatus 1b or 1c, and the rest of the components of the frame are omitted from the drawings for the sake of simplicity.

According to the present example, upon receiving a frame from the bridge apparatus 2, the MAC search unit 40 of the bridge apparatus 1b or 1c is arranged to read the VLAN tag V1, the VLAN tag V2, and the SA of the received frame, learn the correspondence between the SA, the VLAN tag V1, the port receiving the frame, and the VLAN tag V2, and store the learned information in the MAC table 44.

It is noted that the MAC table 44 associates a set of the SA and the VLAN tag V1 with a set of the corresponding output port and the VLAN tag V2. After storing the learned information, the MAC leaning unit 40 transmits the learned frame to the VLAN tag V2 removing unit 41. In turn, the VLAN tag V2 removing unit removes the VLAN tag V2 from the received frame and transmits the resulting frame to the MAC search unit 42.

The MAC search unit 42 is arranged to read the VLAN tag of a received frame, and access the MAC table 44 to determine a corresponding port to which the frame is to be output using the VLAN tag V1 as key information.

If the corresponding port is a port VLAN, the VLAN tag V1 removing unit 43 receives the frame from the MAC search unit 42, removes the VLAN tag V1 from the received frame, and transmits the resulting frame to the corresponding station 3b or 3c. On the other hand, if the corresponding port is a tag VLAN, the MAC search unit 42 of the bridge apparatus 1b or 1c transmits the frame with the VLAN tag V2 removed therefrom to a subsequent apparatus where the VLAN tag V1 may be removed. Then, the resulting frame is transmitted to the corresponding station 3b or 3c.

Further, it is noted that the present invention is not limited to the specific embodiments described above, and variations and modifications may be made without departing from the scope of the present invention.

## Claims

1. A communication apparatus that constructs a virtual group with a portion of information appliances provided over a network, the apparatus being **characterized by** comprising:
a tag attaching unit configured to attach to a frame received at an input port a group identification tag for identifying the group to which the frame belongs and a route identification tag for identifying a route of the frame;
a queue configured to store the frame according to the group identification tag and the route identification tag attached to the frame;
a read control unit configured to control a read rate for reading the frame from the queue.

2. The communication apparatus as claimed in claim 1, further comprising:
a traffic flow control unit configured to control traffic flow of the frame to be stored in the queue according to the group identification tag attached to the frame;
wherein the frame is stored in the queue according to the route identification tag attached to the frame.

3. The communication apparatus as claimed in claim 2, wherein the traffic flow control unit is configured to control a maximum flow of the frame to be stored in the queue according to the group identification tag attached to the frame.

4. The communication apparatus as claimed in claim 2, wherein the traffic control unit is configured to control a maximum flow and a minimum flow of the frame to be stored in the queue according to the group identification tag attached to the frame.

5. The communication apparatus as claimed in claim 4, wherein when the traffic flow of the frame is greater than or equal to the minimum flow and is less than or equal to the maximum flow, the traffic flow control unit attaches to the frame an indicator for indicating that the frame is to be discarded with priority upon congestion of the queue.

6. The communication apparatus as claimed in claim 1, wherein the route identification tag is attached to a position corresponding to a position in the frame to which the group identification tag is attached prior to the attachment of the route identification tag.

7. A communication apparatus that constructs a virtual group with a portion of information appliances provided over a network, the apparatus being **characterized by** comprising:
a tag removing unit configured to remove from a frame received at an input port a route identification tag for identifying a route of the frame; and
an output unit configured to read from the frame a group identification tag for identifying the group to which the frame belongs and output the frame to an output port according to the group identification tag.

8. A band control method for controlling a communication apparatus that constructs a virtual group with a portion of information appliances provided over a network, the method being **characterized by** comprising:
a tag attaching step of attaching to a frame received at an input port a group identification tag for identifying the group to which the frame belongs and a route identification tag for identifying a route of the frame;
a buffering step of storing the frame in a queue according to the group identification tag and the route identification tag attached to the frame; and
a reading step of reading the frame from the queue according to a read rate set for the queue.

9. A band control method for controlling a communication apparatus that constructs a virtual group with a portion of information appliances provided over a network, the method being **characterized by** comprising:
a tag removing step of removing from a frame received at an input port a route identification tag for identifying a route of the frame; and
an outputting step of reading from the frame a group identification tag for identifying the group to which the frame belongs and outputting the frame to an output port according to the read group identification tag.
